# EUROPÄISCHE PATENTSCHRIFT

(11) **EP 2 548 414 B1**
(45) Veröffentlichungstag und Bekanntmachung des Hinweises auf die Patenterteilung: **18.01.2017**
(21) Anmeldenummer: 11738640.9
(22) Anmeldetag: 28.06.2011
(51) Int. Cl.: H05B 33/08

(54) **ANSTEUERUNG EINES LEUCHTMODULS**
ACTUATION OF A LIGHTING MODULE
COMMANDE D'UN MODULE D'ÉCLAIRAGE

(30) Priorität: 21.07.2010 DE 102010031590
(43) Veröffentlichungstag der Anmeldung: 23.01.2013
(73) Patentinhaber: OSRAM GmbH, 80807 München (DE)
(72) Erfinder: VOLLMER, Ralf, 89075 Ulm (DE)
(86) Internationale Anmeldenummer: PCT/EP2011/060850
(87) Internationale Veröffentlichungsnummer: WO 2012/010388

(56) Entgegenhaltungen:
- DE-A1- 4 420 589
- DE-A1-102006 024 607
- US-A1- 2003 164 809

## Beschreibung

Die Erfindung betrifft eine Schaltung und ein Verfahren zur Ansteuerung eines Leuchtmoduls.

Lichtquellen, wie sie beispielsweise in einem Fahrzeug eingesetzt werden, erfordern einen bestimmten Betriebsspannungsbereich. So ermöglicht z.B. eine Spannung in einem Bereich von 8 V bis 16 V den Betrieb einer Lichtquelle mit voller Helligkeit. Weiterhin kann aber auch ein Betrieb der Lichtquelle mit reduzierter Helligkeit in einem Spannungsbereich von 6 V bis 8 V gefordert werden.

Bei der Reihenschaltung aus mehreren Leuchtdioden (LEDs) beträgt eine Vorwärtsspannung typischerweise zwischen 6 V und 8 V. Zur Einstellung dieser Vorwärtsspannung kann ausgehend von der beispielhaft genannten Betriebsspannung im Bereich von 8 V bis 16 V ein Tiefsetzsteller eingesetzt werden.

Allerdings ist es problematisch, dass eine solche Reihenschaltung aus LEDs bei einer Betriebsspannung von beispielsweise 6 V bereits nicht ausreichend hell leuchtet. Die Ursache besteht darin, dass der Lichtstrom der Leuchtdiode wegen der exponentiellen Diodenkennlinie in Verbindung mit dem erwähnten Tiefsetzsteller bei der Betriebsspannung von 6 V bereits zu gering ist. In einem solchen Fall, also bei einem Betrieb der Leuchtdiode mit reduzierter Helligkeit bei der vorgegebenen Betriebsspannung in Höhe von 6 V, könnte ein Hochsetzsteller vorgesehen werden, um die Betriebsspannung wieder so anzuheben, dass die Leuchtdiode mit einer ausreichenden Helligkeit leuchtet. Anstelle des vorstehend genannten Tiefsetzstellers könnte also ein Hochtiefsetzsteller eingesetzt werden.

Hierbei ist es von Nachteil, dass eine solche Maßnahme das Betriebsgerät der Lichtquelle verteuert und aufgrund der zusätzlich benötigten Bauteile auch vergrößert.

Die DE 44 20 589 A1 offenbart eine Fahrradbeleuchtung mit einem Dynamo und mehreren Lichtquellen sowie einer Einrichtung zum Messen der Dynamospannung und zum Schalten der Lichtquellen, wobei die Lichtquellen oberhalb einer bestimmten Dynamospannung in Serie und unterhalb der bestimmten Dynamospannung parallel an die Versorgungsspannung geschaltet sind.

Die **Aufgabe** der Erfindung besteht darin, die vorstehend genannten Nachteile zu vermeiden und insbesondere eine effiziente Lösung zu schaffen, um eine Lichtquelle mit mehreren LEDs auch bei geringen Betriebsspannungen mit reduzierter Helligkeit betreiben zu können.

Diese Aufgabe wird gemäß den Merkmalen des Patentanspruchs 1 gelöst. Weiterbildungen der Erfindung ergeben sich auch aus den abhängigen Ansprüchen.

Der erste Betriebsmodus entspricht beispielsweise einem Betrieb des Leuchtmoduls mit voller Helligkeit und der zweite Betriebsmodus kann einem Betrieb des Leuchtmoduls mit einer reduzierten Helligkeit entsprechen.

Durch die abwechselnde Ansteuerung der mindestens zwei Halbleiterleuchtelemente ist jeweils ein Teil der Halbleiterleuchtelemente ausgeschaltet, die Betriebsspannung wird für den Betrieb der gerade aktiven Halbleiterleuchtelemente, z.B. von einem Tiefsetzsteller, angepasst. Hierdurch kann vorteilhaft erreicht werden, dass in dem zweiten Betriebsmodus die aktiven Halbleiterleuchtelemente in deren energieeffizienten Arbeitspunkt betrieben werden und zugleich das Leuchtmodul insgesamt mit reduzierter Helligkeit leuchtet, weil ein Teil der Halbleiterleuchtelemente inaktiv ist. Durch einen ausreichend schnellen Wechsel zwischen den Schaltzuständen kann erreicht werden, dass das menschliche Auge eine gleichförmige reduzierte Helligkeit wahrnimmt.

Somit wird vorteilhaft mit nur einem Tiefsetzsteller das Leuchtmodul in zwei Betriebsmodi betrieben, wobei der zweite Betriebsmodus eine reduzierte Helligkeit des Leuchtmoduls bei einer effizienten Ansteuerung der Halbleiterleuchtelemente erlaubt.

Eine Weiterbildung ist es, dass abhängig von der Höhe der Betriebsspannung der erste Betriebsmodus oder der zweite Betriebsmodus einstellbar ist.

Insbesondere kann ein Überschreiten des Schwellwerts detektiert und somit der erste Betriebsmodus (re-)aktiviert werden.

Eine andere Weiterbildung ist es, dass die mindestens zwei Halbleiterleuchtelemente alternierend oder in Gruppen alternierend ansteuerbar sind.

Insbesondere können die mehreren Halbleiterleuchtelemente in Reihenschaltungen gruppiert werden, wobei diese Gruppen abwechselnd aktiviert werden. Pro Gruppe kann mindestens ein Halbleiterleuchtelement vorgesehen sein.

Insbesondere ist es eine Weiterbildung, dass die mindestens zwei Halbleiterleuchtelemente abwechselnd ansteuerbar sind mittels
- einer bistabilen Kippstufe;
- eines Zählers;
- eines Schieberegisters;
- eines Mikrokontrollers oder Mikroprozessors.

Auch ist es eine Weiterbildung, dass die mindestens zwei Halbleiterleuchtelemente abwechselnd mit einer Frequenz ansteuerbar sind, die so hoch ist, dass von dem menschlichen Auge kein Flimmern wahrnehmbar ist.

Beispielsweise kann für die Umschaltung eine Schalt- oder Taktfrequenz von mindestens 65 Hz eingesetzt werden.

Ferner ist es eine Weiterbildung, dass die Schaltung einen Tiefsetzsteller aufweist, anhand dessen
- in dem ersten Betriebsmodus eine Versorgungsspannung für die Reihenschaltung der mindestens zwei Halbleiterleuchtelemente einstellbar ist;
- in dem zweiten Betriebsmodus die Versorgungsspannung für einen Teil der mindestens zwei Halbleiterleuchtelemente einstellbar ist.

Somit wird vorteilhaft erreicht, dass der Tiefsetzsteller die entsprechend für einen Teil der Reihenschaltung aus Halbleiterleuchtelementen benötigte Versorgungsspannung bereitstellt. Damit können die abwechselnd aktiven Halbleiterleuchtelemente über den Tiefsetzsteller in ihrem energetisch effizienten Arbeitspunkt betrieben werden.

Dadurch, dass in dem zweiten Betriebsmodus zu jedem Zeitpunkt nur ein Teil der mindestens zwei Halbleiterleuchtelemente aktiv ist, wird auch nur eine reduzierte Versorgungsspannung für diesen aktiven Teil der Halbleiterleuchtelemente benötigt. Daher kann ein Hochsetzsteller entfallen und eine Regelung der Versorgungsspannung ist für beide Betriebsmodi mit dem Tiefsetzsteller möglich.

Eine andere Weiterbildung ist es, dass die Schaltung zum Betreiben einer Lichtquelle, insbesondere einer Lichtquelle eines Fahrzeugs eingesetzt wird.

Wie bereits ausgeführt wurde, können die mindestens zwei Halbleiterleuchtelemente einzeln oder in Gruppen abwechselnd angesteuert werden. Vorzugsweise weist hierbei jede Gruppe eine Reihenschaltung von Halbleiterleuchtelementen auf.

Die vorstehenden Ausführungen gelten entsprechend auch für das Verfahren zur Ansteuerung des Leuchtmoduls.

Weiterhin wird die oben genannte Aufgabe gelöst mittels einer Lichtquelle umfassend die hier beschriebene Schaltung. Insbesondere kann es sich bei der Lichtquelle um eine Lichtquelle eines Fahrzeugs handeln (z.B. Scheinwerfer, Nebelschlussleuchte, Rückfahrscheinwerfer, etc.).

Ausführungsbeispiele der Erfindung werden nachfolgend anhand der Zeichnungen dargestellt und erläutert.

### Es zeigen:

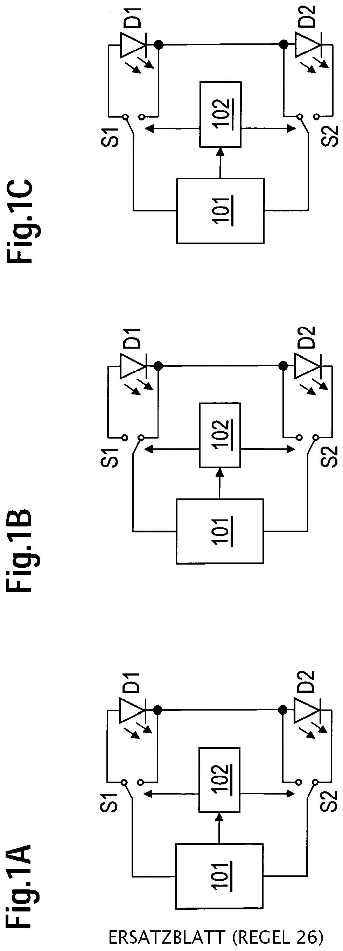

- Fig. 1A: ein schematisches Blockschaltbild in einem ersten Betriebsmodus, bei dem eine Betriebsspannung größer als ein vorgegebener Schwellwert ist und eine Reihenschaltung aus einer ersten und einer zweiten Leuchtdiode mit der Betriebsspannung verbunden ist;
- Fig. 1B: basierend auf der Darstellung von Fig. 1A einen Schaltzustand eines zweiten Betriebsmodus, in dem nur die zweite Leuchtdiode aktiv ist;
- Fig. 1C: basierend auf der Darstellung von Fig. 1A einen Schaltzustand des zweiten Betriebsmodus, in dem nur die erste Leuchtdiode aktiv ist.

Vorzugsweise weist ein Leuchtmodul mehrerer Halbleiterleuchtelemente auf, die insbesondere zumindest teilweise als Reihenschaltung betrieben werden können. Bei dem Halbleiterleuchtelement kann es sich um eine Leuchtdiode handeln. Auch ist es möglich, dass die Leuchtdiode ein Halbleiterleuchtelement oder mehrere Halbleiterleuchtelemente aufweist.

In einem ersten Betriebsmodus wird das Leuchtmodul mit einer vollen Betriebsspannung versorgt, die Halbleiterleuchtelemente sind in Reihe geschaltet. Insbesondere kann der Wirkungsgrad eines Betriebsgeräts oder Treibers zum Betrieb des Leuchtmodus für den ersten Betriebsmodus optimiert eingestellt sein.

In einem zweiten Betriebsmodus soll das Leuchtmodul mit einer reduzierten Helligkeit leuchten. Dieser Betriebsmodus wird erkannt, wenn die Betriebsspannung unter einen vorgegebenen Schwellwert abfällt. In diesem Fall werden alternierend Teile der Reihenschaltung, also für eine bestimmte Zeitdauer jeweils nur ein Teil der Halbleiterleuchtelemente, mit der (reduzierten) Betriebsspannung versorgt.

Beispielsweise wird bei einer Reihenschaltung aus zwei LEDs in dem zweiten Betriebsmodus abwechselnd je eine LED mit der Betriebsspannung verbunden. Ein Tiefsetzsteller, der auch für den ersten Betriebsmodus die Versorgung des Leuchtmoduls mit der passenden Spannung sicherstellt, regelt in diesem Fall die Versorgungsspannung so ein, dass nur eine Leuchtdiode betrieben wird. Durch das alternierende Hin- und Herschalten zwischen den Leuchtdioden ist nur eine Leuchtdiode aktiv, die andere Leuchtdiode ist spannungsfrei. Das Schalten zwischen den Leuchtdioden erfolgt vorzugsweise mit einer Frequenz, die so bemessen ist, dass von dem menschlichen Auge kein Flimmern wahrnehmbar ist.

Hierbei ist es von Vorteil, dass durch ausreichend schnelles alternierendes Schalten zwischen den Leuchtdioden für das menschliche Auge der Eindruck einer vollflächig leuchtenden Lichtquelle mit (gegenüber dem ersten Betriebsmodus) reduzierter Helligkeit entsteht.

Entsprechend können mehrere Halbleiterleuchtelemente vorgesehen sein, die einzeln (der Reihe nach) angesteuert werden. Auch können in dem zweiten Betriebsmodus mehrere Halbleiterleuchtelemente gruppiert, d.h. zusammen, angesteuert werden.

Zur Umsetzung des zweiten Betriebsmodus ist vorzugsweise eine Steuerelektronik vorgesehen, die eine geringe Betriebsspannung detektiert und somit den zweiten Betriebsmodus erkennt. Daraufhin erfolgt die alternierende Ansteuerung der Halbleiterleuchtelemente (einzeln oder in Gruppen) mit dem vollen Betriebsstrom. Entsprechend kann die Steuerelektronik die volle Betriebsspannung erkennen und entsprechend den ersten Betriebsmodus aktivieren, in dem die Reihenschaltung aus den Halbleiterleuchtelementen des Leuchtmoduls mit der Betriebsspannung verbunden sind.

Hierbei ist es von Vorteil, dass kein aufwändiger Hochtiefsetzsteller benötigt wird, sondern ein günstig zu realisierender Tiefsetzsteller ausreicht und trotzdem die Lichtverteilung unter verschiedenen Einsatzbedingungen nicht geändert wird. Vielmehr wird auf effiziente Art die Helligkeit des Leuchtmoduls reduziert.

**Fig. 1A** zeigt ein schematisches Blockschaltbild in einem ersten Betriebsmodus, bei dem eine Betriebsspannung 101 größer als ein vorgegebener Schwellwert ist. Ein Leuchtmodul umfasst zwei Leuchtdioden D1, D2. Ferner sind zwei Schalter S1, S2 vorgesehen, z.B. zwei elektronisch ansteuerbare Schalter (Transistoren, Mosfets, o.ä.). Ist also die Betriebsspannung 101 größer als der vorgegebene Schwellwert, ist über die Schalter S1, S2 die Reihenschaltung aus den Leuchtdioden D1, D2 mit der Betriebsspannung 101 verbunden.

Beispielsweise kann eine Steuereinheit 102 vorgesehen sein, die eine Komparatorschaltung aufweist, anhand derer die Betriebsspannung 101 auswertbar ist. Abhängig von dieser Auswertung werden von der Steuereinheit 102 die elektronischen Schalter S1, S2 entsprechend angesteuert.

Unterschreitet die Betriebsspannung 101 den vorgegebenen Schwellwert, so wird dies von der Steuereinheit 102 erkannt und es wird jeweils eine der Leuchtdioden D2 (siehe **Fig. 1B**) und D1 (siehe **Fig. 1C**) abwechselnd mit der Betriebsspannung verbunden. Entsprechend verfügt die Steuereinheit 102 über eine Möglichkeit zum Hin- und Herschalten zwischen den in Fig. 1B und Fig. 1C gezeigten Stellungen der elektronischen Schalter S1 und S2. Dies kann z.B. mittels einer Kippstufe (z.B. einer astabilen Kippstufe oder eines astabilen Mulitvibrators) erreicht werden. Die Umschaltfrequenz liegt vorzugsweise oberhalb einer Frequenz, die von dem menschlichen Auge als Flimmern wahrnehmbar ist. Beispielsweise kann diese Frequenz in einem Bereich zwischen 65 Hz und 100 KHz liegen. Die Steuereinheit kann mit wenigen Bauteilen diskret und/oder in Verbindung mit einem integrierten Schaltkreis (z.B. TLC555) ausgeführt sein. Auch ist es möglich, dass ein Mikrokontroller oder ein Mikroprozessor die Erkennung der Versorgungsspannung 101 und/oder die Ansteuerung der Schalter S1, S2 übernimmt.

Ergänzend sei darauf hingewiesen, dass die in den Figuren gezeigte Einheit 101 symbolisch als "Versorgungsspannung" bezeichnet ist und insbesondere einen Wert der Versorgungsspannung der Steuereinheit 102 bereitstellt. Ferner kann die Einheit 101 den genannten Tiefsetzsteller umfassen, der die reduzierte Versorgungsspannung entsprechend dem für den Betrieb einer einzelnen Leuchtdiode benötigten Spannungsniveau anpasst. Der Tiefsetzsteller kann auch separat, z.B. als Teil der Steuereinheit 102 ausgeführt sein.

Insbesondere sei angemerkt, dass das Leuchtmodul mehrere Halbleiterleuchtelemente, insbesondere mehrere Leuchtdioden, umfassen kann. Die hier beispielhaft erläuterte Serienschaltung kann - z.B. abhängig von der Höhe der verfügbaren Versorgungsspannung in dem zweiten Betriebsmodus - auch jeweils mehr als eine Leuchtdiode (also einen Teil der in Reihe geschalteten Leuchtdioden) ansteuern. Beispielsweise könnte analog zu dem in Fig. 1A gezeigten Beispiel das Leuchtmodul eine Reihenschaltung aus sechs Leuchtdioden umfassen und in dem zweiten Betriebsmodus gemäß Fig. 1B werden die ersten zwei Leuchtdioden (in Reihe geschaltet) angesteuert, in dem zweiten Betriebsmodus gemäß Fig. 1C werden die zweiten zwei Leuchtdioden (in Reihe geschaltet) angesteuert und weiterhin - auch gemäß dem zweiten Betriebsmodus - gibt es einen dritten Teilzyklus, in dem die letzten beiden Leuchtdioden (in Reihe geschaltet) angesteuert werden.

In diesem Fall stellt die Steuereinheit 102 einen alternierenden Zyklus zwischen drei Schaltzuständen her, wobei jeweils zwei der sechs Leuchtdioden mit der Betriebsspannung verbunden sind. Vorzugsweise ist hierbei für die Schalter S1, S2 eine weitere Schaltebene vorgesehen, so dass jeweils nur zwei der sechs Leuchtdiode in jedem Zyklus des zweiten Betriebsmodus mit der Betriebsspannung verbunden werden können.

Die Umschaltung zwischen den Schaltzuständen kann z.B. mittels eines Timerbausteins oder eines Schieberegisters erfolgen, wobei zwischen drei Zuständen iterative gewechselt wird und pro Zustand eine Schalterstellung der elektronischen Schalter umgesetzt wird. Insbesondere kann diese Funktionalität in einem integrierten Schaltkreis, z.B. einem Mikrokontroller, programmiert sein.

Die hier vorgeschlagene Schaltung kann z.B. zum Betrieb einer Lichtquelle eines Fahrzeugs eingesetzt werden, z.B. eines Blinkers, eines Nebelscheinwerfers, o.ä.

### Bezugszeichenliste:

- 101: Betriebsspannung (bzw. Einheit, die auch eine Betriebsspannung bereitstellt, z.B. ein Treiber oder eine Stromregelung)
- 102: Steuereinheit
- S1: (elektronischer) Schalter
- S2: (elektronischer) Schalter
- D1: Leuchtdiode (bzw. Halbleiterleuchtelement)
- D2: Leuchtdiode (bzw. Halbleiterleuchtelement)

## Patentansprüche

1. Schaltung zur Ansteuerung eines Leuchtmoduls, das mindestens zwei Halbleiterleuchtelemente (D1, D2) umfasst, wobei die Schaltung derart ausgebildet ist, dass
- die mindestens zwei Halbleiterleuchtelemente (D1, D2) in einem ersten Betriebsmodus in Reihe geschaltet sind, und
- bei einem Unterschreiten eines vorgegebenen Schwellwerts einer Betriebsspannung (101) ein zweiter Betriebsmodus detektiert wird und
- in dem zweiten Betriebsmodus die mindestens zwei Halbleiterleuchtelemente (D1, D2) abwechselnd angesteuert werden,
**dadurch gekennzeichnet, dass** die Schaltung einen Tiefsetzsteller aufweist, anhand dessen
- im ersten Betriebsmodus eine Versorgungsspannung für die Reihenschaltung der mindestens zwei Halbleiterleuchtelemente (D1, D2) eingestellt wird, und
- in dem zweiten Betriebsmodus die Versorgungsspannung für einen Teil der mindestens zwei Halbleiterleuchtelemente (D1, D2) eingestellt wird,
wobei in dem zweiten Betriebsmodus die mindestens zwei Halbleiterleuchtelemente alternierend mit einer Frequenz im Bereich zwischen 65 Hz und 100 KHz angesteuert werden, so dass von dem menschlichen Auge kein Flimmern wahrnehmbar ist.

2. Schaltung nach Anspruch 1, wobei die Schaltung ausgebildet ist, die mindestens zwei Halbleiterleuchtelemente in Gruppen alternierend anzusteuern.

3. Schaltung nach Anspruch 1 oder 2, wobei die Schaltung ausgebildet ist, die mindestens zwei Halbleiterleuchtelemente anzusteuern mittels
- einer bistabilen Kippstufe;
- eines Zähler;
- eines Schieberegisters;
- eines Mikrokontrollers oder Mikroprozessors.

## Claims

1. Circuit for driving a luminous module comprising at least two semiconductor luminous elements (D1, D2), wherein the circuit is configured in such a way that
- the at least two semiconductor luminous elements (D1, D2) are connected in series in a first operating mode, and
- a second operating mode is detected in the event of a predefined threshold value of an operating voltage (101) being undershot, and
- the at least two semiconductor luminous elements (D1, D2) are driven alternately in the second operating mode,
**characterized in that** the circuit comprises a buck converter with the aid of which
- a supply voltage for the series connection of the at least two semiconductor luminous elements (D1, D2) is set in the first operating mode, and
- the supply voltage for a portion of the at least two semiconductor luminous elements (D1, D2) is set in the second operating mode,
wherein, in the second operating mode, the at least two semiconductor luminous elements are driven alternately with a frequency in the range of between 65 Hz and 100 kHz, such that no flicker is perceptible to the human eye.

2. Circuit according to Claim 1, wherein the circuit is configured to drive the at least two semiconductor luminous elements alternately in groups.

3. Circuit according to Claim 1 or 2, wherein the circuit is configured to drive the at least two semiconductor luminous elements by means of
- a bistable multivibrator;
- a counter;
- a shift register;
- a microcontroller or microprocessor.

## Revendications

1. Circuit de commande d'un module d'éclairage comprenant au moins deux éléments d'éclairage semi-conducteurs (D1, D2), le circuit étant conçu de sorte que
- les au moins deux éléments d'éclairage semi-conducteurs (D1, D2) sont commutés en série dans un premier mode de fonctionnement, et
- un second mode de fonctionnement est détecté dans le cas où une tension de service (101) passe en dessous d'une valeur seuil prédéfinie et,
- dans le second mode de fonctionnement, les au moins deux éléments d'éclairage semi-conducteurs (D1, D2) sont commandés de manière alternée,
**caractérisé en ce que** le circuit comprend un convertisseur abaisseur au moyen duquel,
- dans le premier mode de fonctionnement, une tension d'alimentation est réglée pour le circuit série des au moins deux éléments d'éclairage semi-conducteurs (D1, D2) et,
- dans le second mode de fonctionnement, la tension d'alimentation est réglée pour une partie des au moins deux éléments d'éclairage semi-conducteurs (D1, D2),
les au moins deux éléments d'éclairage semi-conducteurs étant, dans le second mode de fonctionnement, commandés de manière alternée à une fréquence comprise entre 65 Hz et 100 kHz, de façon qu'aucun scintillement ne soit perceptible par l'oeil humain.

2. Circuit selon la revendication 1, le circuit étant conçu pour commander les au moins deux éléments d'éclairage semi-conducteurs en groupes de manière alternée.

3. Circuit selon la revendication 1 ou 2, le circuit étant conçu pour commander les au moins deux éléments d'éclairage semi-conducteurs au moyen
- d'une bascule électronique bistable ;
- d'un compteur ;
- d'un registre à décalage ;
- d'un microcontrôleur ou microprocesseur.
